(19) Europäisches Patentamt
European Patent Office
Office européen des brevets

(11) **EP 2 602 598 B1**

(12) **FASCICULE DE BREVET EUROPEEN**

(45) Date de publication et mention
de la délivrance du brevet:
**13.08.2014 Bulletin 2014/33**

(51) Int Cl.:
***G01J 5/08*** *(2006.01)*      ***G01J 5/20*** *(2006.01)*
***G01J 5/02*** *(2006.01)*

(21) Numéro de dépôt: **12194156.1**

(22) Date de dépôt: **26.11.2012**

(54) **Détecteur bolométrique d'un rayonnement électromagnetique dans le domaine du térahertz et dispositif de détection matriciel comportant de tels détecteurs**

Bolometrischer Detektor für elektromagnetische Strahlung im Spektralbereich von Terahertz und Matrix, die solche Detektoren umfasst

Bolometric detector for electromagnetic radiation in the terahertz spectral band and detector matrix comprising such detectors

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2011 FR 1161426**

(43) Date de publication de la demande:
**12.06.2013 Bulletin 2013/24**

(73) Titulaire: **COMMISSARIAT A L'ENERGIE ATOMIQUE ET AUX ENERGIES ALTERNATIVES 75015 Paris (FR)**

(72) Inventeurs:
• **Ouvrier-Buffet, Jean-Louis 74320 SEVRIER (FR)**
• **Meilhan, Jérome 38000 GRENOBLE (FR)**
• **N'Guyen, Duy Thong 38600 FONTAINE (FR)**
• **Simoens, François 38640 CLAIX (FR)**

(74) Mandataire: **Vuillermoz, Bruno et al Cabinet Laurent & Charras "Le Contemporain" 50, Chemin de la Bruyère 69574 Dardilly Cédex (FR)**

(56) Documents cités:
**EP-A1- 2 246 677     US-B1- 6 329 655**

EP 2 602 598 B1

**Description**

**DOMAINE DE L'INVENTION**

La présente invention a trait au domaine des détecteurs bolométriques à antenne, et plus particulièrement aux détecteurs à antennes papillons croisées, destinés à la détection d'un rayonnement électromagnétique dans la gamme du térahertz.

La détection dans la gamme du térahertz, c'est-à-dire dans la gamme de fréquences comprise entre 100 gigahertz et 10 térahertz, présente de nombreuses applications.

De façon non limitative, il est ainsi possible de citer :

■ le diagnostic médical, pour lequel la détection dans le térahertz autorise l'accès à des détails de structure anatomique et les réactions chimiques qui s'y produisent, que ne fournissent ni les rayons X ni les ultra-sons ;

■ le domaine militaire et la sécurité aérienne, avec par exemple la réalisation de radars anti-furtivité ou de radars haute résolution permettant de faire de la discrimination ;

■ l'étude et la détection de la pollution atmosphérique, l'observation en ondes submillimétriques fournissant en effet des informations importantes sur la chimie atmosphérique et permettant ainsi un suivi inégalé des polluants atmosphériques comme par exemple le trioxyde d'azote, qui est difficilement détectable par les techniques classiques car présentant de fortes raies d'absorption dans l'infrarouge lointain ;

■ l'identification d'espèces chimiques, de nombreux composés chimiques complexes ayant une signature dans la gamme terahertz suffisamment univoque pour permettre leur détection de manière certaine, comme par exemple certains explosifs et produits toxiques, certains composés issus de la maturation des fruits ou encore, certains composés issus de la combustion industrielle ;

■ l'analyse de phénomènes moléculaires ou atomiques, la spectroscopie térahertz permettant d'obtenir de nouvelles informations sur des mécanismes comme la photoexcitation, la photodissociation et la solvatation. Il en va de même pour l'analyse d'interactions moléculaires (états vibratoires des molécules ou des liaisons hydrogène par exemple), de systèmes à phase condensée, de processus dynamiques dans des grosses molécules, telles que les peptides et les protéines, ou encore l'observation de l'orientation des polymères avec une technique basée sur le rayonnement térahertz ;

■ l'étude des propriétés des matériaux, comme les semi-conducteurs, pour déterminer de manière non destructive, par exemple leur mobilité, la dynamique de porteurs ultra-rapides et les interactions porteurs-phonons, les supraconducteurs, les polymères, les céramiques, les matériaux organiques et les matériaux poreux. De plus, des matériaux tels que les plastiques, le papier et les textiles sont transparents dans la gamme térahertz, et en revanche, les métaux sont de parfaits réflecteurs et l'eau possède un grand pouvoir absorbant. Ainsi, la détection dans cette gamme est particulièrement adaptée à l'inspection de produits emballés ou au contrôle de procédés de fabrication in situ et en temps réel par exemple ; et

■ la télécommunication large bande, la course à des débits d'information toujours plus élevés, autant sur terre qu'entre satellites, poussant les industriels à développer des systèmes fonctionnant à des fréquences qui atteignent aujourd'hui plusieurs centaines de gigahertz, voire demain plusieurs térahertz.

**ETAT DE LA TECHNIQUE**

Usuellement, un détecteur bolométrique résistif mesure la puissance d'un rayonnement incident dans la gamme infrarouge. Il comprend à cet effet un élément bolométrique résistif absorbant, qui convertit le flux lumineux en flux calorifique, ce qui engendre une élévation de température dudit élément par rapport à une température de référence. Cette augmentation de température induit alors une variation de la résistance électrique de l'élément absorbant, provoquant des variations de tension ou de courant aux bornes de celui-ci. Ces variations électriques constituent le signal délivré par le capteur.

Toutefois, la température de l'élément absorbant est usuellement dépendante en grande partie de l'environnement de celui-ci, et notamment de la température du substrat qui comprend le circuit électronique de lecture. Afin d'insensibiliser au maximum l'élément absorbant de son environnement, et ainsi augmenter la sensibilité du détecteur, l'élément absorbant est généralement isolé thermiquement du substrat.

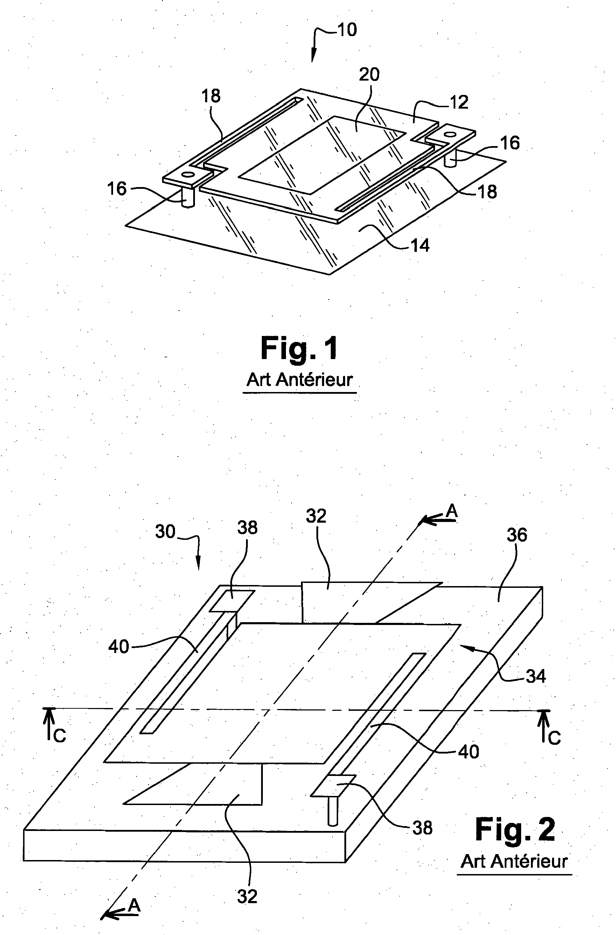

La figure 1 est une vue schématique en perspective d'un détecteur bolométrique résistif élémentaire **10** de l'état de la technique illustrant ce principe d'isolation thermique. Ce détecteur élémentaire, se présentant dans l'exemple décrit sous la forme d'une membrane suspendue, fait classiquement partie d'une matrice de détecteurs élémentaires à une ou deux dimensions.

Le détecteur **10** comporte une fine membrane **12** absorbant le rayonnement incident, suspendue au dessus d'un substrat - support **14** par l'intermédiaire de deux clous d'ancrage conducteurs **16** auxquels elle est fixée par deux bras d'isolation thermique **18.** La membrane **12** comprend usuellement une couche d'isolant électrique, comme par exemple du $SiO_2$, du SiO, du SiN, du ZnS ou autres, qui assure la rigidité mécanique de la membrane **12,** ainsi qu'une couche métallique d'interconnexion électrique déposée sur la couche d'isolant.

Une couche mince **20** de matériau thermométrique résistif est par ailleurs déposée au centre de la membrane **12** sur la couche métallique d'interconnexion, notamment une couche réalisée en un matériau semi-conducteur, tel que le silicium polycristallin ou amorphe de type p ou n faiblement ou fortement résistif, ou bien un oxyde de vanadium ($V_2O_5$, $VO_2$) élaboré dans une phase semi-conductrice.

Enfin, le substrat - support **14** comprend un circuit électronique intégré sur une plaquette de silicium, usuellement connu sous l'expression « circuit de lecture ». Le circuit de lecture comporte d'une part les éléments de stimuli et de lecture de l'élément thermométrique **20,** et d'autre part les composants de multiplexage qui permettent de sérialiser les signaux issus des différents éléments thermométriques présents dans le détecteur matriciel.

En fonctionnement, la membrane **12** s'échauffe sous l'effet d'un rayonnement électromagnétique incident et la puissance calorifique produite est transmise à la couche **20** de matériau thermométrique. Périodiquement, le circuit de lecture agencé dans le substrat **14** polarise la membrane **12** en soumettant les clous **16** à une tension de polarisation et recueille le courant circulant dans l'élément thermométrique **20** pour en déduire une variation de sa résistance et donc le rayonnement incident à l'origine de ladite variation.

L'agencement et le fonctionnement d'un tel détecteur étant classique, il ne sera pas expliqué plus en détail pour des raisons de concision. Il doit cependant être noté que la membrane **12** remplit, outre la fonction d'isolation thermique, trois fonctions principales : celle d'antenne pour la réception du rayonnement, celle de conversion de la puissance électromagnétique réceptionnée en puissance calorifique, et celle de mesure thermométrique de la puissance calorifique produite. Remplissant le rôle d'antenne, les dimensions de la membrane **12** sont en conséquence sélectionnées pour être du même ordre de grandeur que la longueur d'onde du rayonnement destiné à être mesuré.

Or, dans le domaine du térahertz, les longueurs d'onde peuvent atteindre le millimètre, ce qui nécessite donc une membrane du même ordre de grandeur. Toutefois, pour de telles dimensions, la masse calorifique, la tenue mécanique et les pertes par rayonnement de la membrane sont si problématiques qu'elles nuisent in fine à l'efficacité du détecteur.

C'est pourquoi, pour une telle gamme de fréquences, la fonction de réception du rayonnement est découplée des autres fonctions. La fonction de réception est ainsi assurée par une antenne plane et la fonction de conversion de la puissance électromagnétique en puissance calorifique est quant à elle assurée par la charge résistive de l'antenne. Les dimensions de la charge satisfont classiquement aux conditions d'adaptation d'impédance qui dépendent de la géométrie de l'antenne et de la nature des couches la supportant, afin d'obtenir une conversion optimale. La charge résistive est par ailleurs en contact thermique avec un élément thermométrique pour la mesure de la puissance calorifique produite. L'ensemble constitue alors un bolomètre à antenne.

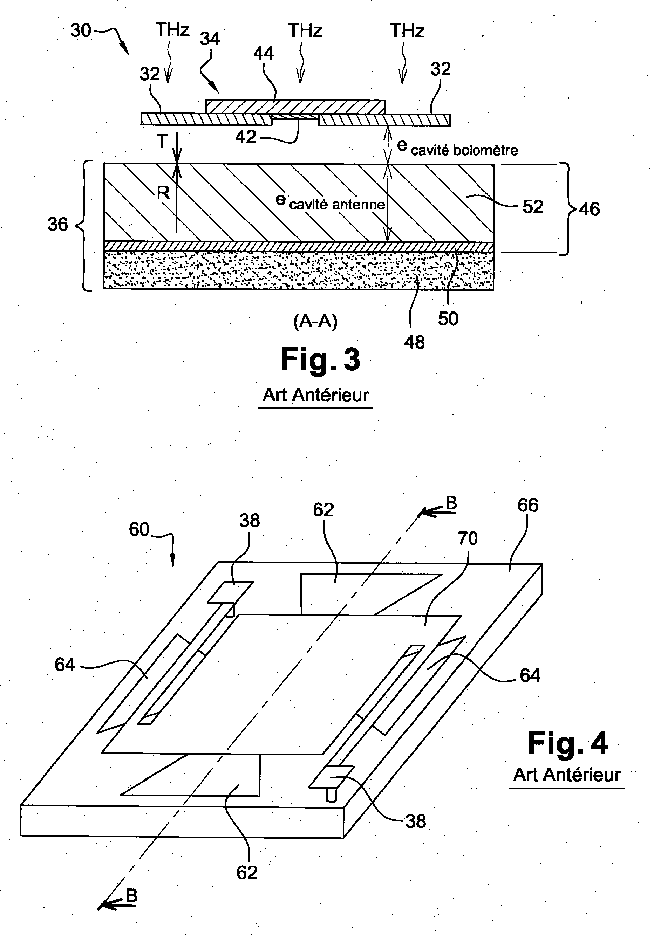

Le document US-A-2006/0231761 décrit un bolomètre à antenne dit « à couplage résistif direct » **30** fonctionnant dans la gamme millimétrique, par exemple dans la gamme de 1 à 10 THz, et muni d'une antenne papillon **32,** dont des vues schématiques en perspective et en coupe sont illustrées au sein des figures 2 et 3 respectivement. Le bolomètre est réalisé sous la forme d'une membrane **34** suspendue au dessus d'un substrat-support **36** par l'intermédiaire de deux clous d'ancrage conducteurs **38** ou « bras de soutien », auxquels elle est fixée par deux bras d'isolation thermique **40**. La membrane **34** comporte l'antenne papillon **32,** une charge résistive **42** dans le même plan que l'antenne papillon **32** et au contact de celle-ci, ainsi qu'un élément thermométrique **44** réalisé sur et/ou sous la charge résistive **42** et au contact de celle-ci. La charge résistive **42** présente une résistance carrée optimisée pour obtenir un couplage résistif maximal avec l'antenne, notamment une résistance carrée comprise entre 100Ω et 200Ω. L'antenne papillon est mieux connue sous l'expression anglo-saxonne « *bow-tie* », et est explicitée par exemple sur la thèse de R. PEREZ, consultable sur le site suivant : http://www.unilim.fr/theses/2005/sciences/2005limo0053/perez_r.pdf.

Une simple antenne ne peut absorber la totalité de l'énergie incidente et une partie de l'énergie incidente est transmise en arrière de l'antenne. Plus précisément, une partie de l'énergie incidente absorbée est réémise en arrière de l'antenne. Afin de renforcer l'absorption globale, un ensemble réflecteur **46** est prévu dans le substrat-support **36** au-dessus du circuit de lecture **48** comprenant d'une part les éléments de stimuli et de lecture de l'élément thermométrique **44,** et d'autre part les composants de multiplexage qui permettent de sérialiser les signaux issus des différents éléments thermométriques présents dans le détecteur matriciel.

L'ensemble réflecteur **46** comporte une couche réfléchissante **50** sur laquelle est déposée une couche de matériau diélectrique **52** satisfaisant la relation :

$$e = \lambda/(4n) \qquad (1)$$

où $\lambda$ est une longueur d'onde pour laquelle, et autour de laquelle, un phénomène de résonance est souhaité, $e$ est l'épaisseur de la couche **52**, et $n = \sqrt{\varepsilon}$ avec $\varepsilon$ représentant la permittivité diélectrique du matériau constitutif de la couche **52**. Une cavité quart d'onde est ainsi obtenue.

Dans une telle configuration, l'élément thermométrique est indépendant de l'antenne, et sa taille ne dépend plus alors de la longueur d'onde incidente mais de facteurs déterminant les performances intrinsèques du détecteur (sensibilité, rapport signal sur bruit, etc...), en adéquation avec les exigences de l'application visée, par exemple de l'imagerie active ou de l'imagerie passive.

Par ailleurs, dans la plupart des cas, le rayonnement électromagnétique incident n'est pas polarisé, de sorte que sa réception par une seule antenne ne permet pas de capter la totalité de la puissance électromagnétique. Toutefois, un rayonnement non polarisé peut être considéré comme résultant de la superposition de deux composantes polarisées linéairement dans deux directions orthogonales, chacune de ces composantes transportant la moitié de l'énergie de l'onde. Comme cela est connu en soi, une manière efficace de capter un rayonnement électromagnétique incident est d'utiliser deux antennes papillons croisées.

Toutefois l'emploi de deux antennes papillons croisées suspendues sur une membrane induit une diminution sensible de la résistance thermique de la membrane car l'une des antennes papillons traverse inévitablement les bras d'isolation thermique.

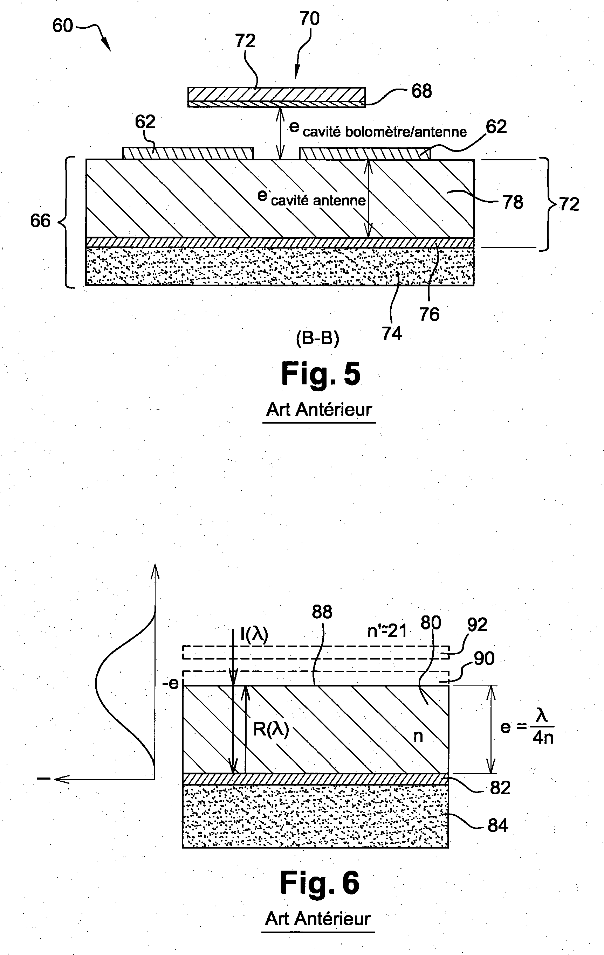

En se référant aux vues schématiques de dessus et en section des figures 4 et 5, le document US 6 329 655 décrit un bolomètre à antenne **60,** fonctionnant dans la gamme millimétrique et muni de deux antennes papillons croisées **62, 64,** qui pallie ce problème. Le principe du bolomètre **60** repose sur le couplage capacitif réalisé entre les antennes **62, 64,** disposées sur un substrat - support **66,** et une charge résistive **68,** agencée dans une membrane suspendue **70** et sur laquelle est disposée un élément thermométrique **72.**

La charge résistive **68,** qui prend la forme d'une couche carrée agencée au droit du centre des antennes **62, 64,** présente une surface en regard de celles-ci et forme donc avec les antennes **62**, **64** une capacité. Le rayonnement capté par les antennes **62, 64** est ainsi transmis à la charge **68** par couplage capacitif.

La résistance de la charge **68** et la valeur de la capacité que celle-ci forme avec les antennes **62, 64** sont choisies pour établir un couplage capacitif élevé, avantageusement pour satisfaire au mieux la relation suivante, qui établit une adaptation d'impédance optimale entre les antennes **62, 64** et la charge résistive **68,** et donc le couplage capacitif optimal :

$$\sqrt{\left(\frac{1}{\pi.f.C}\right)^2 + (R.C)^2} \approx 100\Omega$$

où f est la fréquence du rayonnement, C est la valeur de la capacité formée entre les antennes **62, 64** et la charge résistive **68,** et R est la valeur de la résistance de la charge résistive **68.** Les caractéristiques du couplage capacitif règlent donc notamment, via la valeur de la capacité C, la hauteur $e_{cavité\_bolomètre}$ de la cavité séparant la membrane **70** du substrat-support **66.**

Enfin, pour les raisons évoquées précédemment, afin de renforcer l'absorption globale du rayonnement, un ensemble réflecteur **72** est prévu dans le substrat-support **66** au-dessus d'un circuit de lecture **74** comprenant d'une part, les éléments de stimuli et de lecture de l'élément thermométrique **68,** et d'autre part les composants de multiplexage qui permettent de sérialiser les signaux issus des différents éléments thermométriques présents dans le détecteur matriciel.

L'ensemble réflecteur **72** comporte une couche réfléchissante **76** sur laquelle est déposée une cavité quart d'onde formée par une couche de matériau diélectrique **78** satisfaisant la relation e = λ/(4n) décrite précédemment. L'ensemble réflecteur **72** et les antennes **62, 64** forment ensemble une cavité résonnante.

Le principe d'une cavité résonnante pour la détection thermométrique est décrit en relation avec la figure 6. Comme cela est connu en soi, une cavité résonnante consiste à établir une interférence constructive entre un rayonnement monochromatique *I,* de longueur d'onde λ, incident sur un élément absorbant, notamment des antennes, et le rayonnement *R* réfléchi par l'ensemble réflecteur formée d'une couche réflectrice **82** métallique, sur laquelle est déposée la couche de matériau **80,** la permittivité diélectrique ε et l'épaisseur *e* de la couche **80** étant choisies selon la relation (1) de manière à régler la résonance sur la longueur d'onde souhaitée. L'élément absorbant est formé sur la couche **80,** tel qu'illustré par l'élément **90** et/ou suspendu au dessus de celle-ci, tel qu'illustré par l'élément **92.**

De cette manière, le déphasage entre le rayonnement incident *I* et le rayonnement réfléchi *R* est nul à la distance *e* de la couche réflectrice **82,** de sorte qu'une interférence constructive est obtenue à cette distance et donc une absorption optimale de l'énergie du champ électromagnétique incident. Comme mentionné précédemment, la couche **80** est communément désignée sous l'expression de « cavité quart d'onde » en raison de la relation e = λ/(4n).

Un agencement optimal d'une membrane bolométrique suspendue et d'une cavité quart d'onde est réalisé lorsque la couche **80** est une couche préférentiellement de vide, voire de gaz de faible conductivité thermique, et que la membrane bolométrique est placée à la distance *e* de la couche réflectrice **82** qui est alors déposée sur un substrat **84** comprenant le circuit de lecture de la membrane. Dans un tel cas, la membrane est à la fois isolée du substrat **84** et placée à l'endroit où l'absorption de l'énergie du champ électromagnétique est maximale.

Ce type d'agencement est par exemple couramment utilisé pour la détection thermométrique infrarouge pour lequel l'épaisseur *e* est comprise entre 2 micromètres et 5 micromètres, distance qui permet la production de masse des membranes suspendues ayant une tenue mécanique de qualité. En effet, comme cela est connu en soi, pour produire une membrane suspendue au dessus d'un support, une couche sacrificielle est tout d'abord déposée sur la couche réflectrice, puis la membrane est construite sur la couche sacrificielle. Une fois la membrane achevée, la couche sacrificielle est retirée de sorte que la membrane est suspendue, généralement dans le vide, au dessus du support. En munissant le support d'une couche réflectrice et en choisissant une couche sacrificielle présentant l'épaisseur *e* souhaitée, une cavité quart d'onde est donc obtenue avec la membrane placée à l'épaisseur *e* de la couche réflectrice.

Cet agencement est toutefois difficilement réalisable pour une détection térahertz. En effet, pour une telle gamme de longueurs d'onde, l'épaisseur *e* est supérieure à 10 micromètres, voire supérieure à 30 micromètres. Tout d'abord, des plots de soutien présentant une telle hauteur ne permettent pas une tenue mécanique de qualité de la membrane suspendue. Ensuite, on observe des problèmes de décollement de la couche sacrificielle pour de telles épaisseurs en raison des contraintes résiduelles générées lors du dépôt qu'elle subit lors de la fabrication de la membrane, contraintes qui augmentent à mesure que l'épaisseur de la couche sacrificielle augmente.

C'est pourquoi un ensemble réflecteur **46, 72** de l'état de la technique, telle qu'illustré par exemple aux figures 3 et 5, est réalisé dans un matériau solide **52, 78**, et que la membrane bolométrique **34, 70** est suspendue au-dessus de l'ensemble réflecteur **46, 72** de quelques micromètres pour son isolation thermique, au moyen de bras d'isolation thermique d'épaisseur, de largeur, et de longueur appropriées. Cet espace au-dessus de l'ensemble réflecteur est généré par le dépôt d'une couche sacrificielle dont l'épaisseur doit demeurer compatible avec sa stabilité mécanique lors du procédé de fabrication de micro-bolomètre et de plus être compatible avec la formation des contacts entre la membrane bolométrique suspendue et le substrat comportant l'ensemble réflecteur **46, 72**.

Ceci permet d'avoir des plots de soutien de hauteur raisonnable et évite les problèmes de décollement de couche sacrificielle. La hauteur de suspension des membranes n'est donc plus dictée par l'épaisseur de l'ensemble réflecteur et peut donc être très largement inférieure à celle-ci. On note ainsi que la membrane bolométrique **34, 70** n'est plus placée de manière optimale par rapport à l'ensemble réflecteur **46, 72**, mais à une distance de quelques micromètres au dessus de celle-ci, en profitant de fait qu'il y a encore un phénomène d'optimisation de l'absorption de l'énergie du champ électromagnétique à cette distance, comme illustré sur le graphe de la partie gauche de la figure 6. Celle-ci illustre l'intensité du champ électromagnétique, qui décroit à mesure que l'on s'éloigne de la couche réflectrice **82.** L'agencement de l'état de la technique concernant la détection térahertz est donc un compromis entre la faisabilité technique d'une membrane suspendue au-dessus d'un ensemble réflecteur dont on cherche à optimiser le facteur de qualité.

Un tel agencement pose toutefois encore un certain nombre de problèmes spécifiques.

Tout d'abord, une couche solide **52, 78** de grande épaisseur nécessite des reprises de contact entre le circuit de lecture et la membrane bolométrique de fabrication complexe, entrainant notamment des chutes de rendement. Par exemple, pour un détecteur destiné à détecter un rayonnement autour de 700 GHz, l'épaisseur de l'ensemble réflecteur **46, 72** comprenant une couche en oxyde de silicium (l'un des matériau les plus couramment utilisé dans le domaine de la microélectronique), est d'environ 33 micromètres. Or pour fabriquer à grande échelle une couche d'une telle épaisseur traversée par des vias de connexion, il est nécessaire de mettre en oeuvre au moins trois étapes de dépôt, chacune associée à la réalisation d'une portion des vias.

Ensuite, la couche **52, 78** est déposée sur une couche métallique à laquelle elle peut ne pas adhérer suffisamment pour éviter tout risque de décollement lors des étapes de fabrication ultérieures.

Pour diminuer l'épaisseur de la couche **52, 78,** un diélectrique de forte permittivité diélectrique peut être utilisé pour satisfaire la relation (1), et donc résoudre au moins partiellement ces problèmes. Toutefois, à mesure que la permittivité diélectrique augmente, il apparaît des phénomènes électromagnétiques dommageables pour le fonctionnement des antennes papillons, notamment un couplage entre antennes de plus en plus important, ce qui dégrade la qualité de la détection. Le choix de l'épaisseur de l'ensemble réflecteur résulte donc généralement d'un compromis entre plusieurs phénomènes antagonistes.

Le document EP 2246677 divulgue un bolomètre fonctionnant dans la gamme térahertz, muni de deux antennes papillons croisées.

## EXPOSE DE L'INVENTION

Le but de la présente invention est de proposer un ensemble réflecteur pour un détecteur térahertz à base de membranes bolométriques suspendues, qui présente une épaisseur réduite sans nécessiter en contrepartie une augmentation de sa permittivité diélectrique.

A cet effet, l'invention a pour objet un détecteur bolométrique d'un rayonnement électromagnétique dans une gamme de longueurs d'onde appartenant au domaine du térahertz, comprenant:

■ un support comprenant un ensemble réflecteur pour ledit rayonnement électromagnétique ;
■ au moins un micro-pont bolométrique suspendu au-dessus de l'ensemble réflecteur par des plots de soutien et d'isolation thermique, le micro-pont comprenant :

○ une première antenne papillon destinée à collecter ledit rayonnement électromagnétique ;
○ une charge résistive couplée à ladite antenne pour convertir la puissance électromagnétique collectée en puissance calorifique ; et
○ un élément thermométrique couplé à la charge résistive pour s'échauffer sous l'effet de la puissance calorifique produite,

Selon l'invention, l'ensemble réflecteur comporte :

■ une couche réflectrice dudit rayonnement électromagnétique ;
■ une couche de matériau isolant formée sur la couche réflectrice ; et
■ un réseau périodique de motifs métalliques réalisé sur la couche de matériau isolant, l'épaisseur et la permittivité diélectrique de la couche de matériau isolant, et le pas et le facteur de remplissage du réseau étant choisis de manière à obtenir une interférence constructive, au niveau dudit micro-pont, entre le rayonnement incident à détecter et le rayonnement réfléchi par ledit ensemble réflecteur.

Par « micropont », on entend ici la structure suspendue, qui comprend donc notamment une membrane bolométrique et une ou plusieurs antennes.

En d'autres termes, les inventeurs ont observé, sur des détecteurs bolométriques à antenne, qu'il est possible d'obtenir un phénomène de résonance similaire à celui obtenu avec une cavité quart d'onde en combinant une couche réflectrice, une couche de matériau isolant et un réseau périodique de motifs. L'épaisseur constatée pour la couche de matériau isolant est alors inférieure à celle constatée dans l'état de la technique. Plus particulièrement, dans l'état de la technique, l'épaisseur et la permittivité diélectrique de la couche isolante sont choisies pour régler l'épaisseur $e$ de manière à obtenir un déphasage nul entre le rayonnement incident et le rayonnement réfléchi, et donc une interférence constructive. L'introduction du réseau périodique offre au moins deux paramètres de réglage supplémentaires de cette distance, à savoir la période et le facteur de remplissage du réseau, ce qui permet de diminuer cette épaisseur sans pour autant augmenter la permittivité diélectrique.

Ainsi, le rendement d'absorption du détecteur muni de micro-ponts suspendus au-dessus de l'ensemble réflecteur selon l'invention est plus élevé que le rendement d'absorption d'un détecteur muni de micro-ponts suspendus au-dessus d'un support ayant un ensemble réflecteur sans réseau de motifs périodiques.

Un réglage des caractéristiques de l'ensemble réflecteur est par exemple obtenu de la manière suivante. Tout d'abord, l'épaisseur et le matériau de la couche de matériau isolant sont choisis, avantageusement de manière à satisfaire des contraintes de fabrication et/ou de robustesse mécanique. Puis plusieurs détecteurs sont ensuite réalisés en faisant varier les pas et le facteur de remplissage du réseau. Les caractéristiques du réseau permettant une augmentation du rendement d'absorption la plus importante par rapport à un détecteur de référence selon l'art antérieur sont alors retenues.

En variante, l'absorption de l'énergie du champ électromagnétique est simulée informatiquement en utilisant un modèle de la membrane bolométrique et de l'ensemble réflecteur et en modifiant les caractéristiques du réseau. On sait en effet aujourd'hui simuler informatiquement de manière précise le comportement électromagnétique de tels systèmes, notamment au moyen de la technique des éléments finis, comme par exemple implémenté par les logiciels « ANSYS HFSS » de la société ANSYS Inc. et « COMSOL » de la société COMSOL Inc.

Selon un mode de réalisation de l'invention, le pas du réseau est compris entre $\dfrac{\lambda}{12}$ et $\dfrac{\lambda}{20}$, où $\lambda$ est la longueur d'onde du rayonnement électromagnétique à détecter, notamment un pas de réseau sensiblement égale à $\dfrac{\lambda}{16}$. Les inventeurs ont constaté que le phénomène de résonance est aisément obtenu dans cette gamme. Le réglage du facteur de remplissage permet alors une optimisation du rendement d'absorption du détecteur selon l'invention.

Selon un mode de réalisation de l'invention, l'épaisseur de la couche de matériau isolant est comprise entre 8 et 15 micromètres. Une telle épaisseur permet notamment de minimiser les phénomènes de décollement.

Selon un mode de réalisation, le facteur de remplissage du réseau périodique est compris entre 95% et 99,5%, et de préférence entre 97,5% et 99,5%.

Selon un mode de réalisation de l'invention, le micro-pont est suspendu au-dessus du support à une hauteur comprise entre 0,5 micromètre et 2,5 micromètres.

Selon un mode de réalisation, le détecteur comporte des vias métalliques formés dans la couche de matériau isolant et reliant les motifs du réseau à la couche réflectrice, une telle structure n'introduisant pas d'étape de fabrication supplémentaire tout en accroissant le rendement d'absorption du détecteur, lorsque le rayonnement est incident de manière oblique sur celui-ci. De tels vias métalliques peuvent être réalisés en même temps que les vias permettant de connecter le micropont au circuit de lecture

Selon un mode de réalisation, le détecteur comprend une seconde antenne papillon, destinée à collecter le rayonnement électromagnétique, ladite seconde antenne étant croisée avec la première antenne papillon, et formée sur une couche de matériau isolant déposée sur le réseau périodique de motifs, et en couplage capacitif avec la charge résistive du micro-pont. Ainsi, la détection n'est pas sensible à la polarisation du rayonnement. En outre, les antennes sont séparées l'une de l'autre par le vide entre le micro-pont et le substrat, de sorte qu'il existe un couplage réduit entre elles, notamment via un matériau.

Plus particulièrement, la charge résistive comporte un film métallique et le micro-pont comporte des ailettes agencées en regard de la deuxième antenne sur le film métallique de façon à réaliser une adaptation d'impédance entre la seconde antenne et le film métallique.

De préférence, les ailettes adoptent une forme analogue aux parties centrales de la première antenne. Notamment, les ailettes sont recouvertes d'un isolant électrique et l'élément bolométrique est au moins partiellement agencé sur ledit isolant et au moins partiellement au contact du film métallique. En d'autres termes, les ailettes sont conçues en dimension, forme et matériau pour réaliser une adaptation d'impédance optimale avec la première antenne, et cela indépendamment de la seconde antenne.

Selon un mode de réalisation de l'invention, la charge résistive comporte une couche métallique et la seconde antenne est agencée au moins partiellement sur ce film métallique ou couche métallique, et par exemple, celui usuellement présent pour la connexion électrique de l'élément thermométrique avec le circuit de lecture. Le film résistif remplit alors ici la fonction de conversion pour la puissance électromagnétique reçue par la seconde antenne, et cela indépendamment des ailettes et de la première antenne.

L'invention a également pour objet un système de détection comportant au moins un premier et un deuxième détecteur, chacun conforme à la description qui précède, système dans lequel :

■ le premier détecteur est adapté pour détecter un rayonnement électromagnétique dans une première gamme térahertz, et le deuxième détecteur est adapté pour détecter un rayonnement électromagnétique dans une deuxième gamme térahertz différente de la première gamme térahertz ; et

■ la couche réflectrice du premier détecteur est alignée avec la couche réflectrice du deuxième détecteur, et la couche de matériau isolant du premier détecteur est alignée avec la couche de matériau isolant du deuxième détecteur.

En d'autres termes, l'invention permet d'obtenir des ensembles réflecteurs pour différentes longueurs d'onde, lesdits ensembles étant d'épaisseur sensiblement égale, ce qui simplifie la fabrication d'un détecteur multispectral.

**BREVE DESCRIPTION DES FIGURES**

L'invention sera mieux comprise à la lecture de la description qui suit, donnée uniquement à titre d'exemple, et réalisée en relation avec les dessins annexés, dans lesquels des références identiques désignent des éléments identiques ou analogues, et dans lesquels :

■ la figure 1 est une vue schématique en perspective d'un détecteur bolométrique élémentaire de l'état de la technique, déjà décrit ci-dessus;

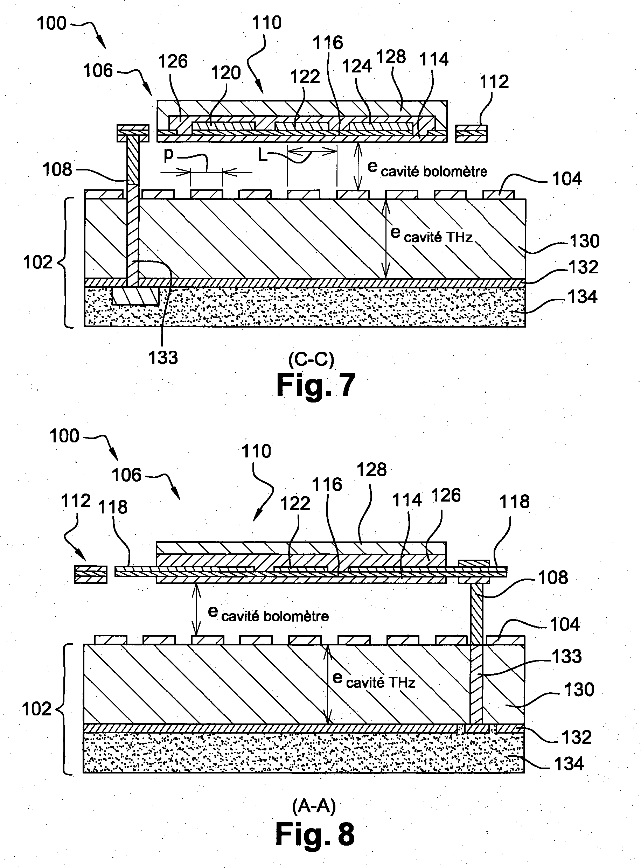

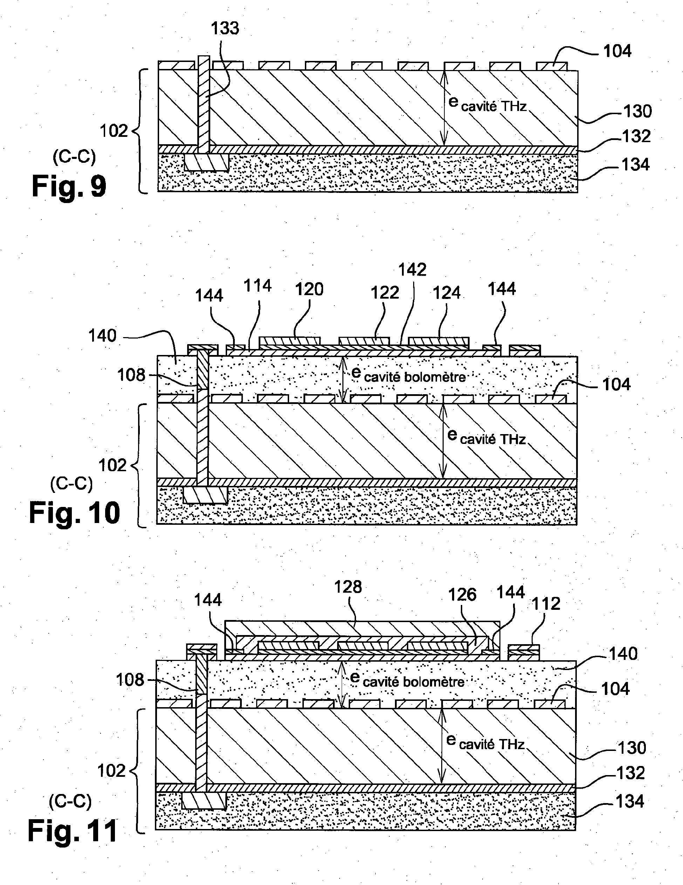

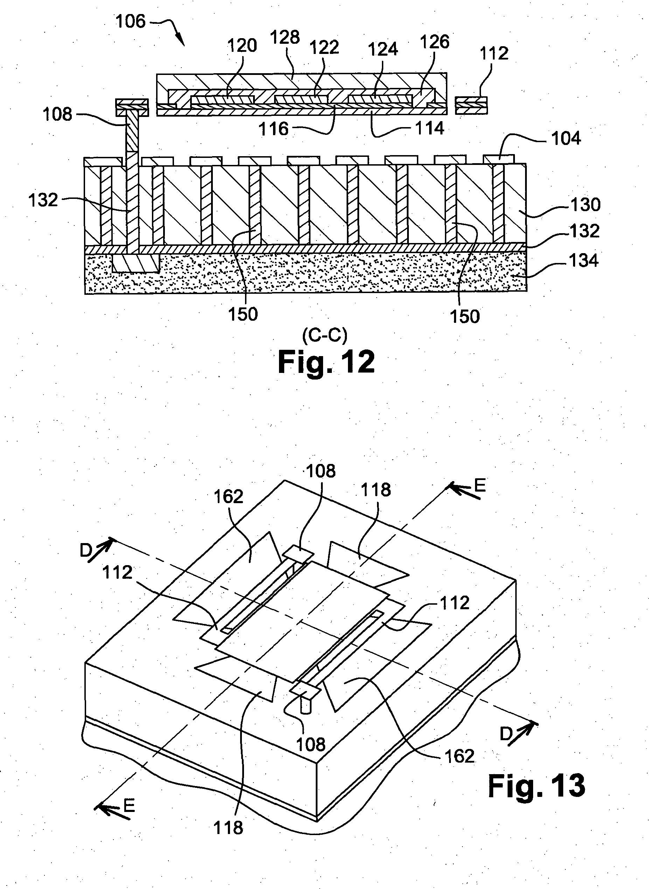

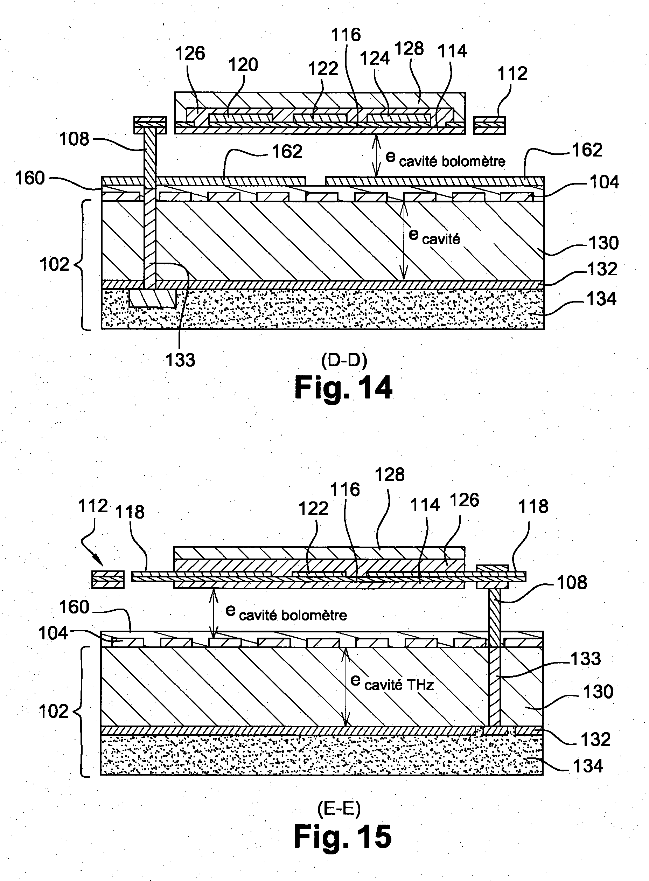

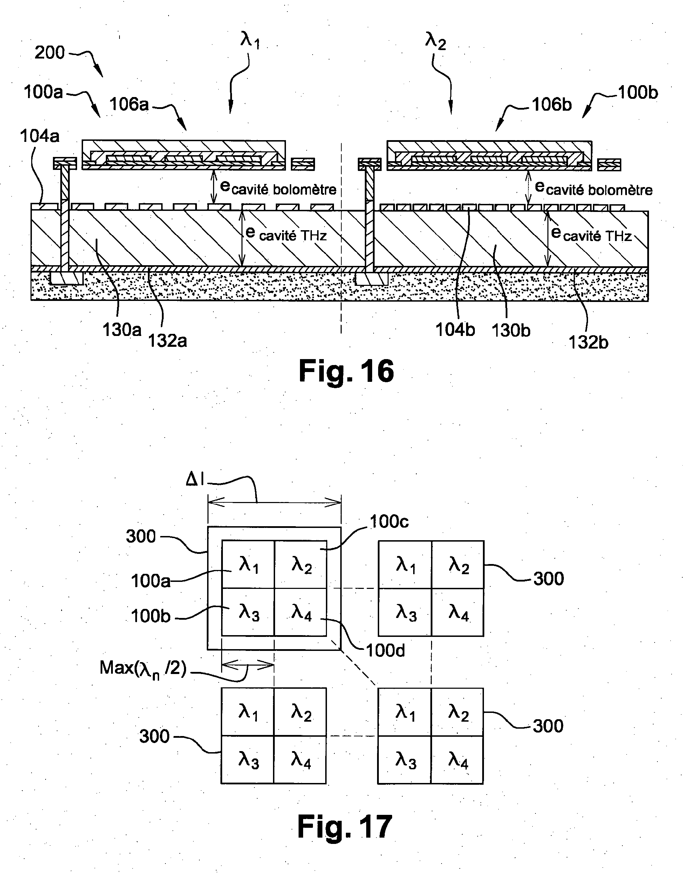

■ la figure 2 est une vue schématique en perspective d'un détecteur bolométrique à antennes selon l'état de la technique, déjà décrit ci-dessus ;
■ la figure 3 est une vue schématique en coupe selon le plan A-A de la figure 2 ;
■ les figures 4 et 5 sont des vues schématiques en perspective et en coupe selon le plan B-B d'un détecteur bolométrique à antennes selon l'état de la technique, déjà décrit ci-dessus ;
■ la figure 6 est une vue en coupe schématique d'une cavité résonnante quart d'onde selon l'état de la technique, déjà décrit ci-dessus ;
■ les figures 7 et 8 sont des vues schématiques en section d'un détecteur selon le premier mode de réalisation de l'invention, conforme à l'architecture générale de la figure 2, et correspondant respectivement à des sections selon les plans C-C et A-A de la figure 2 ;
■ les figures 9 à 11 sont des vues schématiques en coupe selon le plan C-C illustrant un procédé de fabrication du détecteur des figures 7 et 8 ;
■ la figure 12 est une vue en section selon le plan C-C d'une variante du détecteur des figures 7 et 8 ;
■ la figure 13 est une vue schématique en perspective d'un deuxième mode de réalisation d'un détecteur bolométrique selon l'invention ;
■ les figures 14 et 15 sont des vues schématiques en section du détecteur selon le premier mode de réalisation, respectivement selon les plans D-D et E-E de la figure 13 ;
■ la figure 16 est une vue schématique en coupe de deux détecteurs juxtaposés selon l'invention, destinés à détecter deux gammes de fréquence térahertz différentes ;
■ la figure 17 est une vue schématique de dessus d'un détecteur matriciel multispectral conforme à l'invention.

**DESCRIPTION DETAILLEE DE L'INVENTION**

Il va à présent être décrit des détecteurs bolométriques comportant des ensembles réflecteurs selon l'invention. On comprendra cependant que l'invention s'applique évidemment à tout type de détecteur bolométrique comprenant un ensemble réflecteur.

En se référant aux les figures 7 à 8, il est illustré un détecteur bolométrique élémentaire **100** selon un premier mode de réalisation de l'invention, constitutif d'une matrice de détecteurs élémentaires, pour la détection dans une gamme du rayonnement térahertz.

Le bolomètre **100** comporte un support **102,** sur lequel est déposé un réseau périodique de motifs métalliques **104.** Le bolomètre **100** comporte également un micro-pont **106,** suspendu au-dessus du support **102** par au moins deux clous d'ancrage conducteurs **108.**

Le micro-pont **106** est formé d'une partie centrale **110** et de deux bras d'isolation thermique **112** raccordant la partie centrale **110** aux plots, ou clous, d'ancrage **108.** Le micro-pont **106** comporte une première couche d'isolant électrique **114,** ainsi qu'une couche conductrice **116,** et plus particulièrement un film métallique, déposée sur la couche d'isolant **114.**

Une antenne papillon **118** en matériau conducteur, d'axe principal (A-A) parallèle aux bras d'isolation thermique **112,** est par ailleurs formée sur la couche conductrice **116** du micro-pont **106** et s'étend de part et d'autre de la partie centrale **110.** L'antenne papillon **118** est ainsi en couplage résistif avec la couche conductrice **116.**

Des ailettes **120, 122, 124,** réalisées dans le même matériau que l'antenne **118,** sont également prévues de manière facultative sur la couche conductrice **116.** Les ailettes **120, 122, 124,** ainsi que la portion de l'antenne papillon **118** agencée dans la partie centrale **110,** sont recouvertes d'une couche d'isolant électrique **126** pour les isoler électriquement, une partie de la couche conductrice **116** étant laissée libre.

Une couche de matériau thermométrique **128** est par ailleurs déposée sur la couche d'isolant électrique **126** en contact de la couche conductrice **116** au niveau de la partie de celle-ci laissée libre par la couche d'isolant **126.**

Le support **102** comporte une couche isolante **130,** présentant un faible coefficient d'absorption dans la gamme de longueur d'onde de fonctionnement du détecteur, et un réflecteur **132** disposé sous la couche **130.** La couche **130,** le réflecteur **132** et le réseau **104** forment un ensemble réflecteur pour la longueur d'onde d'intérêt. Une couche fonctionnelle **134** comprenant les circuits de lecture du détecteur est enfin prévue sous le réflecteur **132** et est électriquement connectée aux clous **108** par des vias conducteurs **133** traversant la couche **130.**

Le réseau périodique **104** présente au moins un axe de périodicité, par exemple un ensemble de bandes métalliques parallèles, et de préférence au moins deux axes de périodicité afin d'être insensible à la polarisation du rayonnement, par exemple un ensemble de plots rectangulaires, carrés, circulaires, étoilés, notamment en forme de croix de Jérusalem, ou d'étoile à trois branches, etc...

La couche **130** présente une épaisseur comprise entre 1 et 15 micromètres, de préférence entre 8 et 15 micromètres, de préférence de l'ordre de 12 micromètres, ce qui permet notamment une construction aisée des vias **133.**

Le réseau périodique **104** présente quant à lui selon chacun de ses axes de périodicité un pas compris entre $\dfrac{\lambda}{12}$ et $\dfrac{\lambda}{20}$, où λ est une longueur d'onde du rayonnement à détecter, par exemple la longueur d'onde pour laquelle l'antenne papillon est également conçue, et de préférence un pas sensiblement égal à $\dfrac{\lambda}{16}$, ce qui correspond par exemple à un réseau périodique de 8 lignes par 8 colonnes de plots métalliques.

Le facteur de remplissage du réseau selon chaque axe périodique, défini comme étant le rapport entre la dimension du motif *L* selon ledit axe et la somme (*L* + *l*) de la dimension *L* et de l'espacement *l* selon ledit axe entre deux motifs adjacents, est alors choisi pour régler précisément la longueur d'onde de résonance. De préférence, la valeur de l'espacement *l* est choisie une fois avoir déterminé la dimension *L* du motif et une fois avoir déterminé l'épaisseur de la couche **130** dont la détermination se fait sur des critères technologiques, telles que son adhérence, sa durée du dépôt ou autres.

Notamment, le facteur de remplissage est compris entre 95% et 99,5%, et de préférence entre 97,5% et 99,5%.

Il se crée ainsi une interférence constructive au niveau du micro-pont **106** entre le rayonnement incident sur celui-ci et le rayonnement réfléchi par l'ensemble réflecteur. Comme par ailleurs le micro-pont **106** est suspendu à une hauteur $e_{\_cavité\ bolomètre}$ de l'ordre quelques micromètres, donc très inférieure à la longueur d'onde du rayonnement incident, avantageusement une hauteur inférieure à 3 micromètres, par exemple 2 micromètres, le micro-pont **106** est placé dans une région où il y a un maximum d'intensité du champ électromagnétique.

A titre d'exemple numérique, une couche **130** d'oxyde de silicium de 11 micromètres d'épaisseur, sur laquelle repose un réseau périodique de motifs carrés de côté compris entre 29,3 micromètres et 29,65 micromètres, et de préférence 29,65 micromètres, disposés avec un pas de 30 micromètres, permet une absorption optimale par le micro-pont **106** pour une longueur d'onde 450 micromètres (soit une fréquence de 670 GHz).

Pour la même couche **130,** un réseau périodique de motifs carrés de côté compris entre 9,90 micromètres et 9,95 micromètres, et de préférence de 9,95 micromètres, disposés avec un pas de 10 micromètres permet une absorption optimale par le micro-pont **106** d'une longueur d'onde 200 micromètres (soit une fréquence de 1,5 THz).

En fonctionnement, un rayonnement électromagnétique dans la gamme du térahertz est capté par l'antenne papillon **118.** La puissance électromagnétique captée par l'antenne **118** est convertie en chaleur dans les parties de la couche conductrice **116** situées sensiblement entre les ailettes **120, 122**, **124.** L'élément thermométrique **126,** qui est au contact de la couche conductrice **116,** subit alors en raison dudit contact, un échauffement et voit ainsi sa résistance modifiée. La couche conductrice **116,** qui remplit également la fonction d'électrode de polarisation de l'élément thermométrique **128,** est alors régulièrement polarisée pour soumettre l'élément thermométrique **128** par exemple à une tension de polarisation et faire ainsi circuler un courant dans celui-ci de manière à connaître sa variation de résistance, comme cela est connu en soi.

Il va à présent être décrit en relation avec les figures 9 à 11 un procédé de fabrication du détecteur venant d'être décrit. Comme illustré à la figure 9, l'ensemble réflecteur **104, 130, 132** du détecteur comporte un réflecteur **132,** disposé sur le circuit de lecture **134,** comme par exemple une couche d'aluminium, une couche **130** de matériau isolant, présentant de préférence un coefficient d'absorption le plus faible possible dans la gamme de longueurs d'onde de fonctionnement du détecteur. Par exemple, la couche **130** est constituée de SiO, de SiO$_2$, de SiN, de Ta$_2$O$_5$ de Ta$_2$O$_5$-TiO$_2$, de HfO$_2$, de SrTiO$_3$, de Ba$_{1-x}$Sr$_x$TiO$_3$ ou d'un mélange de ceux-ci. L'ensemble réflecteur comporte également le réseau **104.**

Le réseau **104** et la couche **130** sont par ailleurs choisis pour obtenir une interférence constructive au niveau du micro-pont **106** comme précédemment décrit, de manière à obtenir une cavité résonnante pour le rayonnement térahertz objet de la détection.

La couche **130** est par ailleurs traversée par dés connexions électriques **133,** par exemple dans le prolongement des clous d'ancrage **108.** Par exemple, des vias sont réalisés dans la couche **130** selon une technique usuelle, et les vias ainsi produits sont comblés par un métal comme le tungstène, l'aluminium ou le cuivre au moyen d'une technologie damascène associée à une technique de planarisation.

Une fois le support **102** et le réseau **104** fabriqués, une couche sacrificielle **140** (figure 10), réalisée par exemple en polyimide, d'épaisseur comprise entre 0,5 micromètre et 5 micromètres, de préférence entre 0.5 μm et 2.5 μm, est formée sur le réseau 104 et la couche **130.** L'épaisseur de la couche sacrificielle est choisie de préférence la plus faible possible tout en étant compatible avec la tenue mécanique du micro-pont **106** (collage électrostatique) et les exigences d'isolation thermique du micro-pont **106** par rapport au support **102.**

Une couche d'isolant **114** est alors déposée sur la couche sacrificielle **140,** puis un film métallique mince **116,** par exemple constitué de Ti, de TiN, de Pt, de NiCr ou autres, est déposée sur la couche d'isolant **114.**

Comme décrit précédemment, le film métallique **116** réalise la fonction d'alimentation électrique et de lecture de l'élément thermométrique **128** via les bras d'isolation thermique **112** et la fonction de charge résistive de par sa surface en contact avec les l'antenne papillon **118.**

La couche d'isolant **114** et le film mince **116,** chacun d'une épaisseur comprise entre 0,005 micromètre et 0,05 micromètre, sont préférentiellement déposés par PECVD (pour l'expression anglo-saxonne « *Plasma Enhanced Chemical Vapor Deposition* ») ou pulvérisation cathodique, puis gravés chimiquement ou par plasma pour former les bras d'isolation **112.** Le film métallique **116** est également gravé chimiquement ou par plasma pour former une portion centrale **142,** sur laquelle seront formées les ailettes **120, 122, 124** et l'antenne **118,** et des portions latérales **144,** qui seront au contact de l'élément thermométrique **128** pour son alimentation et sa lecture.

La résistance par carré du film métallique **116** est avantageusement choisie de manière à réaliser une isolation thermique efficace du micro-pont **106** par rapport au circuit de lecture **134.** De préférence, la résistance par carré du film métallique **116** est comprise entre 100 Ω/carré et 500 Ω/carré, afin d'obtenir une valeur élevée de résistance thermique des bras du micro-bolomètre. Enfin, le film métallique **116** est connecté au circuit de lecture **134** par l'intermédiaire des clous d'ancrage conducteurs **108,** élaborés au travers de la couche sacrificielle **140** de manière analogue aux connexions **132.**

L'antenne **118** et les ailettes **120, 122, 124** sont quant à elles constituées d'un matériau conducteur comme l'aluminium, le siliciure de tungstène, le titane ou autres. Pour leur formation, une couche du matériau conducteur, d'une épaisseur comprise entre 0,1 micromètre à 0,5 micromètre, est déposée sur la portion centrale **142** du film métallique **116** par pulvérisation cathodique ou par décomposition thermique (LPCVD pour l'expression anglo-saxonne « *Low Pressure Chemical Vapor Deposition* ») ou la décomposition plasma (PECVD), puis la seconde antenne et les ailettes sont formées par gravure chimique, gravure par plasma ou par une technique du type « *lift off* » de ladite couche. En variante, l'antenne et les ailettes sont constituées de multicouches métalliques.

L'antenne **118** et les ailettes **120, 122, 124** ainsi formées définissent des régions qui convertissent le rayonnement électromagnétique térahertz en courant électrique et définissent des zones découvertes du film métallique **116** qui convertissent le courant électrique en énergie thermique.

L'antenne **118** et les ailettes **120, 122, 124** sont ensuite recouvertes d'une couche de matériau isolant **126,** tel que du SiN, du SiO, du ZnS ou autre (figure 11). La couche **126,** d'une épaisseur comprise entre 0,005 micromètre et 0,1 micromètre, est réalisée afin d'éviter tout court circuit entre les ailettes **120, 122, 124** et l'élément thermométrique **128.** La couche **126** est par exemple réalisée à l'aide d'une technique de dépôt basse température telle que la pulvérisation cathodique ou la décomposition plasma (PECVD). La couche **126** est ensuite gravée, par exemple chimiquement ou par plasma, pour faire apparaître les parties latérales **144** du film métallique **116** auxquelles sera connecté l'élément thermométrique **128,** ainsi que les bras d'isolation thermique **112.**

L'élément thermométrique **128** est alors déposé sur la couche **126** et les portions latérales **144** à l'aide par exemple d'une technique de dépôt à basse température telle qu'une pulvérisation. Le matériau constitutif de l'élément thermométrique **128** est par exemple un semi-conducteur amorphe ou polycristallin, tel que du Si, du Ge, du SiC, du a-Si :H, du a-SiGe :H, un matériau métallique ou encore un oxyde de vanadium ou un oxyde de magnétite. Ce matériau doit présenter un coefficient en température (TCR pour *« temperature coefficient resistance »*) non nul. En d'autres termes, il présente une résistance qui varie en fonction de la température.

Enfin, la couche sacrificielle **140** est retirée, la nature de celle-ci déterminant la technique de libération, et de préférence par gravure chimique ou par plasma.

Comme on peut le constater, la gravure des matériaux constitutifs du détecteur selon l'invention est réalisée majoritairement ou exclusivement, par des techniques d'attaque chimique, éventuellement assistées par plasma, ces techniques permettant d'obtenir des gravures précises et reproductibles.

La figure schématique en coupe 12 illustre une variante du mode de réalisation venant d'être décrit, cette variante pouvant également permettre de réaliser n'importe quelle cavité résonnante selon l'invention.

Cette variante diffère du détecteur venant d'être décrit par la présence de vias métallisés **150,** par exemple sensiblement identique aux vias **133** utilisés pour la connectique du micro-pont **106** au circuit de lecture **134,** reliant les motifs du réseau **104** au réflecteur **132**. Ceci permet d'accroître le rendement d'absorption lorsque le rayonnement se présente sous incidence oblique sur le micro-pont **106,** et donc sur l'ensemble réflecteur **104, 130, 132**. En effet, il s'ajoute aux effets capacitifs des effets inductifs car un courant circule alors entre chaque un motif et les motifs les plus proches de celui-ci.

En outre, cette variante n'introduit pas d'étape de fabrication supplémentaire par rapport au procédé précédemment décrit, les vias **150** étant fabriqués simultanément aux vias **133.**

Il a été décrit des détecteurs bolométriques à antenne dans lesquelles les antennes sont suspendues dans un micro-pont. L'invention s'applique également à des détecteurs dans lesquelles une ou plusieurs antennes sont réalisées sur le support.

Un deuxième mode de réalisation de l'invention comprenant une telle antenne est décrit en relation avec les figures 13 à 15. Ce mode de réalisation diffère de celui décrit en relation avec les figures 7 et 8 en ce qu'il comprend en outre une couche d'isolant **160** déposée sur le réseau de motif périodique **104** et en ce qu'une deuxième antenne papillon **162** plane en matériau conducteur, par exemple celui constitutif de la première antenne **118,** est réalisée sur la couche d'isolant **160**. La deuxième antenne **162** est croisée avec la première antenne **118** et d'axe principal (D-D) perpendiculaire à l'axe principal (E-E) de la première antenne.

La deuxième antenne **162** est en couplage capacitif avec les ailettes **120, 122, 124** avec lesquelles elle présente des surfaces en regard. Les ailettes **120, 122, 124** sont également choisies pour réaliser une adaptation d'impédance avec la deuxième antenne **162**. Notamment, les ailettes sont choisies pour satisfaire la relation :

$$\sqrt{\left(\frac{1}{\pi.f.C}\right)^2 + (R.C)^2} \approx 100\Omega$$

où f est une fréquence du rayonnement à détecter, **C** est la valeur de la capacité formée entre la deuxième antenne **162** et les ailettes **120, 122, 124,** et R est la valeur de la résistance en série avec les ailettes **120, 122, 124**. De préférence, l'épaisseur de la cavité séparant le micro-pont **106** et le support **102** est choisie la plus faible possible tout en étant compatible avec la tenue mécanique du micro-pont (collage électrostatique) et le contrainte d'isolation thermique.

Ainsi, la puissance électromagnétique captée par la deuxième antenne **162** est transmise aux ailettes **120, 122, 124** par couplage capacitif. La puissance électromagnétique transmise aux ailettes **120**, **122, 124** est alors convertie en chaleur dans les zones de la couche conductrice **116** situées sensiblement entre les ailettes, sur laquelle les ailettes sont formées et donc en contact électrique.

La couche d'isolant **160,** par exemple constituée de SiN, SiO, ZnS, est déposée sur le réseau **104** à l'aide d'une technique de dépôt à basse température comme par exemple une pulvérisation cathodique, ou un dépôt PECVD. La deuxième antenne **162,** en matériau conducteur comme l'aluminium, le siliciure de tungstène, le titane ou autres, est par exemple formée sur la couche d'isolant **160** par une technique usuelle de photolithographie et présente une épaisseur comprise entre 0,1 micromètre à 0,5 micromètre.

Un tel détecteur à antennes papillons croisées permet un découplage des antennes papillons qui ne sont pas situées sur le même plan et ne sont pas déposées sur un même support, une adaptation d'impédance optimale grâce aux ailettes, l'adaptation d'impédance étant en outre réalisée de manière indépendante pour chacune des antennes, et une surface de la charge résistive très faible, réduisant ainsi le couplage du détecteur avec le rayonnement infrarouge qui est en première approximation proportionnel à la surface de charge.

Il a été décrit des détecteurs conçus pour détecter dans une gamme de rayonnement térahertz. Plus particulièrement, les caractéristiques des détecteurs, notamment la géométrie des antennes et les caractéristiques des ensembles réflecteurs, sont déterminés pour une longueur d'onde particulière, la détection étant ainsi réalisée dans une plage centrée autour de cette longueur d'onde.

L'invention permet avantageusement d'obtenir des ensembles réflecteurs de même épaisseur pour différentes longueurs d'onde, et donc pour différentes longueurs d'onde du rayonnement incident.

La figure 16 est une vue en coupe illustrant schématiquement un détecteur bispectral **200** comportant deux détecteurs 100a, 100b, par exemple deux détecteurs tels que décrits en relation avec les figures 7 et 8, disposés côte-à-côte et partageant un support commun d'épaisseur constante. Notamment, l'épaisseur des couches d'isolant 130a, **130b** entrant dans la constitution des ensembles réflecteurs de ces détecteurs est constante, les réseaux de motif périodique respectif **104a,**

**104b** de ces détecteurs étant conçus pour obtenir le phénomène de résonnance dans deux gammes de longueurs d'onde différentes. Le cas échéant, il peut être prévu un ensemble réflecteur classique, sans réseau de motif périodique, pour le détecteur associé à la gamme de longueur d'onde la plus petite, et un ensemble réflecteur selon l'invention pour la gamme de longueur d'onde la plus grande afin d'obtenir une épaisseur d'ensemble réflecteur constante.

A l'aide d'un tel détecteur multispectral **200,** il est possible de mettre en oeuvre une détection, par exemple une fonction d'imagerie, dans deux gammes de longueur d'onde pour lesquelles on sait l'atmosphère transparente, usuellement désignée « fenêtre atmosphérique », à savoir une première gamme autour de 670 GHz et une deuxième autour de 850 GHz.

Il est également possible de mettre en oeuvre une détection, par exemple une fonction d'imagerie, dans une première gamme, par exemple une des fenêtres atmosphérique, conjointement à la mise en oeuvre d'une fonction de spectroscopie pour identifier la nature d'un matériau, l'identification étant réalisé dans la gamme de 2 à 3 THz.

Evidemment, plus de deux détecteurs différents peuvent être conjointement mis en oeuvre.

De même, l'invention permet d'étendre la gamme de détection spectrale d'un élément unitaire de détection, ou « pixel », d'un détecteur matriciel.

Notamment, on sait que la résolution d'un imageur est déterminée par sa fonction de transfert de modulation, ou « FTM », qui caractérise la réponse fréquentielle du système optique composé de l'optique et du capteur. Pour un système optique idéal, dont la résolution est uniquement limitée par les phénomènes de diffraction, la résolution du système pour la longueur d'onde de détection $\lambda$ est majorée par la valeur $1{,}22 \times \lambda \times N$, où N est l'ouverture du système optique. Or, le pas des pixels d'un détecteur matriciel est usuellement égal à $\lambda/2$, de sorte que les dimensions des pixels ne sont pas des caractéristiques qui limitent la résolution du système dans le domaine térahertz.

Selon un mode de réalisation de l'invention, la caractéristique sub-longueur d'onde des dimensions des pixels peut donc avantageusement être utilisée pour étendre la gamme de détection des pixels.

En se référant à la figure 17, pour un système optique de résolution $\Delta l$, plusieurs membranes avec leurs antennes et ensembles réflecteurs associés sont inscrits dans un carré d'aire $\Delta l \times \Delta l$ afin de réaliser un détecteur d'un rayonnement issu du même point de la scène observée à plusieurs longueurs d'onde, par exemple quatre longueurs d'onde , $\lambda_2, \lambda_3, \lambda_4$.

Il est ainsi obtenu une matrice de « macro » pixels **300** composés d'éléments de détection **100a, 100b, 100c, 100d,** les dimensions desdits éléments étant inférieures ou égales au maximum parmi $\lambda_1/2, \lambda_2/2, ... \lambda_n/2$, et chacun de ces éléments ayant une fréquence d'absorption spécifique. Le nombre de fréquences simultanées est uniquement limité par la diminution de la surface de collecte qui diminue pour une fréquence donnée d'un facteur 1/n.

**Revendications**

1. Détecteur bolométrique d'un rayonnement électromagnétique dans une gamme de longueurs d'onde du domaine du térahertz, comprenant :

   ■ un support (102) comprenant un ensemble réflecteur (104, 130, 132) pour ledit rayonnement électromagnétique ;
   ■ au moins un micro-pont bolométrique (106) suspendu au-dessus de l'ensemble réflecteur (104, 130, 132) par des plots de soutien (108) et d'isolation thermique (112), le micro-pont (106) comprenant :

   ◦ une première antenne papillon (118) destinée à collecter ledit rayonnement électromagnétique ;
   ◦ une charge résistive (116) couplée à ladite antenne (118) pour convertir la puissance électromagnétique collectée en puissance calorifique ; et
   ◦ un élément thermométrique (128) couplé à la charge résistive (116) pour s'échauffer sous l'effet de la puissance calorifique produite,

   ***caractérisé* en ce que** l'ensemble réflecteur (104, 130, 132) comporte :
   ■ une couche réflectrice (132) dudit rayonnement électromagnétique ;
   ■ une couche de matériau isolant (130) formée sur la couche réflectrice (132) ;
   ■ et un réseau périodique de motifs métalliques (104) réalisé sur la couche de matériau isolant (130), l'épaisseur et la permittivité diélectrique de la couche de matériau isolant (130), et le pas et le facteur de remplissage du réseau (104) étant choisis de manière à obtenir une interférence constructive, au niveau dudit micro-pont (106), entre le rayonnement incident à détecter et le rayonnement réfléchi par ledit ensemble réflecteur (104, 130, 132).

2. Détecteur bolométrique selon la revendication 1, ***caractérisé* en ce que** le pas du réseau (104) est compris entre $\dfrac{\lambda}{12}$ et $\dfrac{\lambda}{20}$, où $\lambda$ est la longueur d'onde du rayonnement incident à détecter.

3. Détecteur bolométrique selon la revendication 1 ou 2, ***caractérisé* en ce que** l'épaisseur de la couche de matériau isolant (130) est comprise entre 8 micromètres et 15 micromètres.

4. Détecteur bolométrique selon la revendication 1, 2 ou 3, *caractérisé* **en ce que** le micro-pont (106) est suspendue au dessus du support (102) à une hauteur comprise entre 0,5 micromètre et 2,5 micromètres.

5. Détecteur bolométrique selon la revendication 1, 2 ou 3, *caractérisé* **en ce qu'il** comporte des vias métalliques (150) formés dans la couche de matériau isolant (130) et reliant les motifs du réseau (104) à la couche réflectrice (132).

6. Détecteur bolométrique selon l'une quelconque des revendications précédentes, *caractérise* **en ce qu'il** comprend une seconde antenne papillon (162), destinée à collecter le rayonnement électromagnétique, ladite seconde antenne étant croisée avec la première antenne papillon (118), et formée sur une couche de matériau isolant (160) déposée sur le réseau périodique de motifs (104), et ladite seconde antenne étant en couplage capacitif avec la charge résistive (116) du micro-pont (106).

7. Détecteur bolométrique selon la revendication 6, *caractérisé* **en ce que** la charge résistive en couplage capacitif avec la deuxième antenne (162) comporte un film métallique (116) et **en ce que** le micro-pont (106) comporte des ailettes (120, 122, 124) agencées en regard de la deuxième antenne (162) sur le film métallique (116) de façon à réaliser une adaptation d'impédance entre la seconde antenne et le film métallique (116).

8. Détecteur bolométrique selon la revendication 7, *caractérisé* **en ce que** les ailettes (120, 122, 124) sont recouvertes d'un isolant électrique (126), l'élément thermométrique (128) étant au moins partiellement agencé sur ledit isolant (126) et au moins partiellement au contact avec le film métallique (116).

9. Détecteur bolométrique selon la revendication 6, 7 ou 8, *caractérisé* **en ce que** la charge résistive comporte un film métallique (116), et **en ce que** la première antenne (118) est agencée au moins partiellement sur ce film métallique (116).

10. Système de détection comportant au moins un premier et un deuxième détecteur chacun conforme à l'une quelconque des revendications précédentes, dans lequel :

   ■ le premier détecteur est adapté pour détecter un rayonnement électromagnétique dans une première gamme térahertz, et le deuxième détecteur est adapté pour détecter un rayonnement électromagnétique dans une deuxième gamme térahertz différente de la première gamme térahertz ; et
   ■ la couche réflectrice du premier détecteur est alignée avec la couche réflectrice du deuxième détecteur, et la couche de matériau isolant du premier détecteur est alignée avec la couche de matériau isolant du deuxième détecteur.

**Patentansprüche**

1. Bolometrischer Detektor für eine elektromagnetische Strahlung in einem Wellenlängenspektrum des Terahertzbereichs, Folgendes umfassend:

   ■ einen Träger (102) mit einer Reflektoreinheit (104, 130, 132) für die elektromagnetische Strahlung;
   ■ mindestens eine bolometrische Mikrobrücke (106), die über der Reflektoreinheit (104, 130, 132) mittels Haltekontakten (108) und Wärmeisolationsstiften (112) aufgehängt ist, wobei die Mikrobrücke (106) aufweist:

      ○ eine erste Schmetterlingsantenne (118), die dazu bestimmt ist, die elektromagnetische Strahlung aufzufangen;
      ○ eine Widerstandslast (116), die an die Antenne (118) angeschlossen ist, um die aufgefangene elektromagnetische Energie in Wärmeenergie umzuwandeln; und
      ○ ein thermometrisches Element (128), das an die Widerstandslast (116) angeschlossen ist, um sich unter der Wirkung der erzeugten Wärmeenergie zu erwärmen,

   **dadurch gekennzeichnet, dass** die Reflektoreinheit (104, 130, 132) umfasst:

      ■ eine die elektromagnetische Strahlung reflektierende Schicht (132);
      ■ eine Isoliermaterialschicht (130), die auf der reflektierenden Schicht (132) ausgebildet ist;
      ■ ein periodisches Gitter (104) aus Metallmustern, das auf der Isoliermaterialschicht (130) hergestellt ist, wobei die Dicke und die dielektrische Permittivität der Isoliermaterialschicht (130), und die Teilung und der Füllfaktor des Gitters (104) so gewählt sind, dass eine konstruktive Interferenz im Bereich der Mikrobrücke (106) zwischen der zu erfassenden einfallenden Strahlung und der durch die Reflektoreinheit (104, 130, 132) reflektierten Strahlung erhalten wird.

2. Bolometrischer Detektor nach Anspruch 1, **dadurch gekennzeichnet, dass** die Teilung des Gitters (104)

zwischen $\dfrac{\lambda}{12}$ und $\dfrac{\lambda}{20}$ beträgt, wobei $\lambda$ die Wellenlänge der zu erfassenden einfallenden Strahlung ist.

3. Bolometrischer Detektor nach Anspruch 1 oder 2, **dadurch gekennzeichnet, dass** die Dicke der Isoliermaterialschicht (130) zwischen 8 Mikrometer und 15 Mikrometer umfasst.

4. Bolometrischer Detektor nach Anspruch 1, 2 oder 3, **dadurch gekennzeichnet, dass** die Mikrobrücke (106) über dem Träger (102) in einer Höhe aufgehängt ist, die zwischen 0,5 Mikrometer und 2,5 Mikrometer umfasst.

5. Bolometrischer Detektor nach Anspruch 1, 2 oder 3, **dadurch gekennzeichnet, dass** er metallische Durchkontaktierungen (150) umfasst, die in der Isoliermaterialschicht (130) ausgebildet sind und die Muster des Gitters (104) mit der reflektierenden Schicht (132) verbinden.

6. Bolometrischer Detektor nach einem der vorhergehenden Ansprüche, **dadurch gekennzeichnet, dass** er eine zweite Schmetterlingsantenne (162) umfasst, die dazu bestimmt ist, die elektromagnetische Strahlung aufzufangen, wobei die zweite Antenne mit der ersten Schmetterlingsantenne (118) gekreuzt und auf einer Isoliermaterialschicht (160) ausgebildet ist, die auf dem periodischen Gitter (104) aus Mustern abgeschieden ist, und wobei die zweite Antenne in kapazitiver Kopplung mit der Widerstandslast (116) der Mikrobrücke (106) steht.

7. Bolometrischer Detektor nach Anspruch 6, **dadurch gekennzeichnet, dass** die mit der zweiten Antenne (162) in kapazitiver Kopplung stehende Widerstandslast einen Metallfilm (116) aufweist, und dass die Mikrobrücke (106) Rippen (120, 122, 124) aufweist, die der zweiten Antenne (162) auf dem Metallfilm (116) zugewandt so angeordnet sind, dass eine Impedanzanpassung zwischen der zweiten Antenne und dem Metallfilm (116) realistisch ist.

8. Bolometrischer Detektor nach Anspruch 7, **dadurch gekennzeichnet, dass** die Rippen (120, 122, 124) mit einem elektrischen Isolator (126) bedeckt sind, wobei das thermometrische Element (128) zumindest teilweise auf dem Isolator (126) und zumindest teilweise in Kontakt mit dem Metallfilm (116) angeordnet ist.

9. Bolometrischer Detektor nach Anspruch 6, 7 oder 8, **dadurch gekennzeichnet, dass** die Widerstandslast einen Metallfilm (116) aufweist, und dass die erste Antenne (118) zumindest teilweise auf diesem Metallfilm (116) angeordnet ist.

10. Erfassungssystem, das mindestens einen ersten und einen zweiten Detektor jeweils nach einem der vorhergehenden Ansprüche umfasst, wobei:

■ der erste Detektor dazu angepasst ist, eine elektromagnetische Strahlung in einem ersten Terahertzbereich zu erfassen, und der zweite Detektor dazu angepasst ist, eine elektromagnetische Strahlung in einem zweiten Terahertzbereich zu erfassen, der sich vom ersten Terahertzbereich unterscheidet; und

■ die reflektierende Schicht des ersten Detektors mit der reflektierenden Schicht des zweiten Detektors ausgerichtet ist, und die Isoliermaterialschicht des ersten Detektors mit der Isoliermaterialschicht des zweiten Detektors ausgerichtet ist.

**Claims**

1. A bolometric detector of an electromagnetic radiation in a terahertz wavelength range, comprising:

■ a support (102) comprising an assembly (104, 130, 132) reflective for said electromagnetic radiation;
■ at least one bolometric microbridge (106) suspended above the reflective assembly (104, 130, 132) by support (108) and thermal insulation (112) pads, the microbridge (106) comprising:

∘ a first bowtie antenna (118) intended to collect said electromagnetic radiation;
∘ a resistive load (116) coupled with said antenna (118) to convert the collected electromagnetic power into thermal power; and
∘ a thermometric element (128) coupled with the resistive load (116) to heat up under the effect of the generated thermal power,

**characterized in that** the reflective assembly (104, 130, 132) comprises:
■ a layer (132) reflective for said electromagnetic radiation;
■ an insulating material layer (130) formed on the reflective layer (132);
■ and a periodic array of metallic patterns (104) formed on the insulating material layer (130), the thickness and the dielectric permittivity of the insulating material layer (130), and the pitch and the filing factor of the array (104) being selected to obtain a constructive interference, at the level of said microbridge (106), between the incident radiation to be detected and the radiation reflected by said reflective assembly (104, 130, 132).

2. The bolometric detector of claim 1, *characterized in that* the pitch of the array (104) ranges between $\frac{\lambda}{12}$ and $\frac{\lambda}{20}$, where λ is the wavelength of the incident radiation to be detected.

3. The bolometric detector of claim 1 and 2, *characterized in that* the thickness of the insulating material layer (130) ranges between 8 micrometers and 15 micrometers.

4. The bolometric detector of claim 1, 2, or 3, *characterized in that* the microbridge (106) is suspended above the support (102) at a height ranging between 0.5 micrometer and 2.5 micrometers.

5. The bolometric detector of claim 1, 2, or 3, *characterized in that* it comprises metal vias (150) formed in the insulating material layer (130) and connecting the patterns of the array (104) to the reflective layer (132).

6. The bolometric detector of any of the foregoing claims, *characterized in that* it comprises a second bowtie antenna (162), intended to collect the electromagnetic radiation, said second antenna being crossed with the first bowtie antenna (118), and formed on a layer of insulating material (160) deposited on the periodic pattern array (104), and said second antenna being capacitively coupled with the resistive load (116) of the microbridge (106).

7. The bolometric detector of claim 6, *characterized in that* the resistive load capacitively coupled with the second antenna (162) comprises a metal film (116) and **in that** the microbridge (106) comprises fins (120, 122, 124) arranged in front of the second antenna (162) on the metal film (116) to achieve an impedance matching between the second antenna and the metal film (116).

8. The bolometric detector of claim 7, *characterized in that* the fins (120, 122, 124) are covered with an electric insulator (126), the thermometric element (128) being at least partially arranged on said insulator (126) and at least partially in contact with the metal film (116).

9. The bolometric detector of claim 6, 7, or 8, *characterized in that* the resistive load comprises a metal film (116), and **in that** the first antenna (118) is at least partially arranged on this metal film (116).

10. A detection system comprising at least a first and a second detector, each according to any of the foregoing claims, wherein:

■ the first detector is capable of detecting an electromagnetic radiation in a first terahertz range, and the second detector is capable of detecting an electromagnetic radiation in a second terahertz range different from the first terahertz range; and
■ the reflective layer of the first detector is aligned with the reflective layer of the second detector, and the insulating material layer of the first detector is aligned with the insulating material layer of the second detector.

**Fig. 1**

Art Antérieur

**Fig. 2**

Art Antérieur

(A-A)

**Fig. 3**

Art Antérieur

**Fig. 4**
Art Antérieur

60

70

72

68

62    62

$e_{\text{cavité bolomètre/antenne}}$

66

$e_{\text{cavité antenne}}$

78    }72

76

74

(B-B)

**Fig. 5**

Art Antérieur

88    n'≈21    80    92

$I(\lambda)$    90

-e

$R(\lambda)$    $e = \dfrac{\lambda}{4n}$

n

82

84

**Fig. 6**

Art Antérieur

(C-C)
# Fig. 7

(A-A)
# Fig. 8

(C-C)
**Fig. 9**

(C-C)
**Fig. 10**

(C-C)
**Fig. 11**

(C-C)

**Fig. 12**

**Fig. 13**

126 120 116 122 124 128 114 112

108

160

162 e cavité bolomètre 162

104

e cavité 130

102 132

134

133 (D-D)

**Fig. 14**

112 118 122 116 128 114 126 118

108

160

104 e cavité bolomètre

133

e cavité THz 130

102 132

134

(E-E)

**Fig. 15**

**Fig. 16**

**Fig. 17**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060231761 A
- US 6329655 B

- EP 2246677 A